## Europäisches Patentamt

(19) **European Patent Office**

**Office européen des brevets**

(11) Veröffentlichungsnummer: **0 140 236**

**B1**

(12) # EUROPÄISCHE PATENTSCHRIFT

(45) Veröffentlichungstag der Patentschrift:
13.01.88

(51) Int. Cl.⁴: **A 01 C 7/04**

(21) Anmeldenummer: **84112165.0**

(22) Anmeldetag: **11.10.84**

(54) Einzelkornsägerät.

(30) Priorität: 28.10.83 DE 8330919 U

(43) Veröffentlichungstag der Anmeldung:
08.05.85 Patentblatt 85/19

(45) Bekanntmachung des Hinweises auf die Patenterteilung:
13.01.88 Patentblatt 88/2

(84) Benannte Vertragsstaaten:
AT BE CH DE FR LI NL

(56) Entgegenhaltungen:
DE-A-3 120 568

(73) Patentinhaber: SCHMOTZER AGRARTECHNIC GmbH, Rothenburger Strasse 45, D-8532 Bad Windsheim (DE)

(72) Erfinder: Nagel, Kurt, Paul- Gerhard- Weg 5, D-8532 Bad Windsheim (DE)

(74) Vertreter: Richter, Bernhard, Dipl.- Ing., Beethovenstrasse 10, D-8500 Nürnberg 20 (DE)

**Beschreibung**

Die Erfindung betrifft ein Einzelkornsägerät, bei dem jedes einzelne Saatgutkorn von einer Beize umhüllt ist und vor seiner Ablage im Gerät von einem Schöpfrad aus einem Schöpfraum angehoben und im oberen Gerätebereich in eine Kornkammer eines Kammerrades gelegt wird, aus der dann das Korn im unteren Gerätebereich durch eine in Bodennähe befindliche Ausfallöffnung des Gerätes abgelegt wird, wobei sich die Kornkammern am Außen umfang des Kammerrades befinden. Eine solche Beize ist notwendig, um die Saatgutkörner gegen Schädlinge, Krankheitspilze und dergleichen zu schützen. Es hat sich aber gezeigt, daß die an den Körnern haftende Beize durch die mechanischen Beanspruchungen im Einzelkornsägerät von den Körnern teilweise abgearbeitet wird, bzw. bei deren Bewegen einfach abfällt. Dies hat zur Folge, daß die abgeriebene oder abgefallene Beize, gegebenenfalls auch ein Abrieb der Körner selber, sich im Einzelkornsägerät ansammelt und aufstaut und dieses somit verstopft oder verklebt. Dies führt zu Störungen und insbesondere dazu, daß nicht mehr an jeder vorgesehenen Stelle ein Korn abgelegt wird. Außerdem ist damit der Nachteil verbunden, daß die abgelegten Körner ganz oder teilweise ohne Beize sind und daher von Schädlingen usw. befallen werden können.

Aus der DE-A-31 20 568 ist ein Einzelkornsägerät bekannt, bei dem ein um eine horizontale Achse umlaufendes Zellenrad das Saatgut direkt in seine einzelnen Zellen aufnimmt. Hieraus werden dann die einzelnen Samenkörner mittels eines Auswerfers herausgedrückt. Ein am Umfang des Zellenrades vorgesehener Zellenreiniger soll in der Zelle hängengebliebene Samenkörner oder Fremdkörper aus der Zelle heraus nach innen drücken. Dieses Einzelkornsägerät unterscheidet sich vom Erfindungsgegenstand zunächst dadurch, daß es nicht den Schöpfraum und das Schöpfrad sowie die Übergabe des Kornes vom Schöpfrad in eine Kornkammer eines Kammerrades im oberen Gerätebereich aufweist. Beim vorbekannten Einzelkornsägerät müssen die Körner genau pilliert sein. Sie können also nicht, wie es bei einem Einzelkornsägerät gemäß dem eingangs zitierten Oberbegriff des Anspruches 1 möglich ist, Ecken haben oder unrund sein. Mit gebeiztem Saatgut kann mit dem vorbekannten Einzelkornsägerät nicht störungsfrei gearbeitet werden, weil die Beize die relativ langen, waagerecht verlaufenden Zellen zusetzt und aus diesen gar nicht oder nur in ungenügendem Maße wieder heraustreten kann.

Die Aufgabe der Erfindung besteht demgegenüber darin, bei einem Einzelkornsägerät gemäß dem eingangs zitierten Oberbegriff des Anspruches 1, für eine zweckgemäße Verwendung der von den Körnern abgeriebenen Beize und zugleich dafür zu sorgen, daß diese Beize den Betrieb des Einzelkornsägerätes nicht stört.

Zur Lösung dieser Aufgabe ist, ausgehend vom Oberbegriff des Anspruches 1, gemäß der Erfindung vorgesehen, daß im Einzelkornsägerät zumindest ein Raum für die Aufnahme der von den Körnern abgefallenen oder abgeriebenen Beize (im folgenden kurz "Abrieb" genannt) vorgesehen ist, daß zumindest ein Durchtrittskanal für den Abrieb vom jeweiligen Aufnahmeraum zu der tiefer als der Aufnahmeraum gelegenen Ausfallöffnung führt und daß der Durchtrittskanal bzw. die Durchtrittskanäle sich im Kammerrad befinden, zumindest mit einem Teil ihrer Länge zwischen den Kornkammern des Kammerrades gelegen sind und am Außenumfang des Kammerrades in Richtung zur Ausfallöffnung münden. Der durch die Funktion des Schöpfrades und auch gegebenenfalls Kammerrades entstehende Abrieb fällt durch zum jeweiligen Aufnahmeraum. Somit ist auch dafür gesorgt, daß in den umlaufenden Aufnahmeöffnungen des Schöpfrades keine Verstopfung durch den Abrieb eintreten kann. Der darin mit umlaufende Abrieb läuft nämlich an der feststehenden Wand des Gehäuses vorbei, wird hierdurch bewegt und aufgelockert. Er fällt weiter in den Aufnahmeraum. Etwa direkt in die Kornkammer gelangender Abrieb ist so gelockert, daß er mit dem Korn aus der Kornkammer auf den Erdboden abgelegt wird. Es kann sich also auch in den Kornkammern kein Abriebansammeln und diese zusetzen. Der Aufnahmeraum (es können mehrere Aufnahmeräume vorgesehen sein, doch wird hier und auch in den Ansprüchen der Einfachheit halber nur von einem Aufnahmeraum gesprochen) sammelt den Abrieb (im wesentlichen die abgeriebene oder abgefallene Beize) und leitet ihn durch die Durchtrittskanäle zur Ausfallöffnung, so daß er an die abgelegten Saatkörner gelangt und diese schützend umgibt. Die abgeriebene Beize gelangt dann gemäß den Merkmalen der Erfindung in die Saatfurche. Dies ist wichtig, damit sie dort als Schädlingsbekämpfungsmittel zum Schutz des in die Saatfurche abgelegten Saatgutes zur Verfügung steht. Würde der Abrieb (Beize) dagegen neben der Saatfurche auf der Erdoberfläche abgelegt werden, so könnte er nachteiligerweise nicht die vorstehend erläuterte Schutzfunktion übernehmen.

Ein weiterer Vorteil der Erfindung besteht darin, daß ein an sich bekanntes Kammerrad mit zur Bildung der erläuterten Durchtrittskanäle ausgenutzt ist, d.h. es wird eine bewährte Konstruktion im Sinne der Erfindung ausgestaltet. Dieses Merkmal dient ebenfalls zur Erreichung der erläuterten Funktion, wonach der Abrieb genau in die Furche abgelegt wird. Außerdem kann das Kammerrad mit zur Bildung des Aufnahmeraumes vorgesehen werden (siehe unten).

Weitere Vorteile und Merkmale der Erfindung sind den Unteransprüchen, sowie der nachfolgenden Beschreibung und der zugehörigen Zeichnung eines erfindungsgemäßen Ausführungsbeispieles zu entnehmen. In der Zeichnung zeigt:

Fig. 1: einen senkrechten Schnitt durch ein Einzelkornsägerät nach der Erfindung,

Fig. 2: in einem Schnitt analog der Fig. 1 eine Teildarstellung in natürlicher Größe,

Fig. 3: eine Draufsicht auf das Kammerrad gem. dem Pfeil A in Fig. 1 mit Schnitt durch Gehäuseaußenwand und eine Ausfallöffnung.

Im Saatgutbehälter 1 des Einzelkornsägerätes befindet sich das Saatgut 2, nämlich mit einer Beize umhüllte Einzelsaatkörner. Sie gelangen von dort durch eine Bodenöffnung 3 einer Wand 3' in den Schöpfraum 5, in dem mit Hilfe der Antriebswelle 6 ein Schöpfrad 7 umläuft, dessen Finger 4 je ein Saatkorn 2 erfassen und nach oben in die Lage 4' bewegen. Von hier aus fällt das Saatkorn durch eine Öffnung 8 einer fixen Blechmaske 9 in eine Kornkammer 10 eines Kammerrades 11. Jede Kornkammer enthält also ein einzelnes Korn. Das Kammerrad 11 ist ebenso wie das Schöpfrad 7 fest auf der Antriebswelle befestigt. Beide Räder 7, 11 laufen somit synchron miteinander um, wobei jeder Kornkammer 10 ein Schöpffinger 4 mit seinem Schöpfraum gegenüber liegt. Das Kammerrad fördert jedes Korn soweit nach unten, bis es durch eine Ausfallöffnung 12, die durch einen Ausschnitt des Gehäuseumfanges 13 gebildet ist, in die Saatrinne 20 fallen kann, die von der Säschar 14 gezogen ist. Die vorstehend erläuterte Konstruktion ist bekannt.

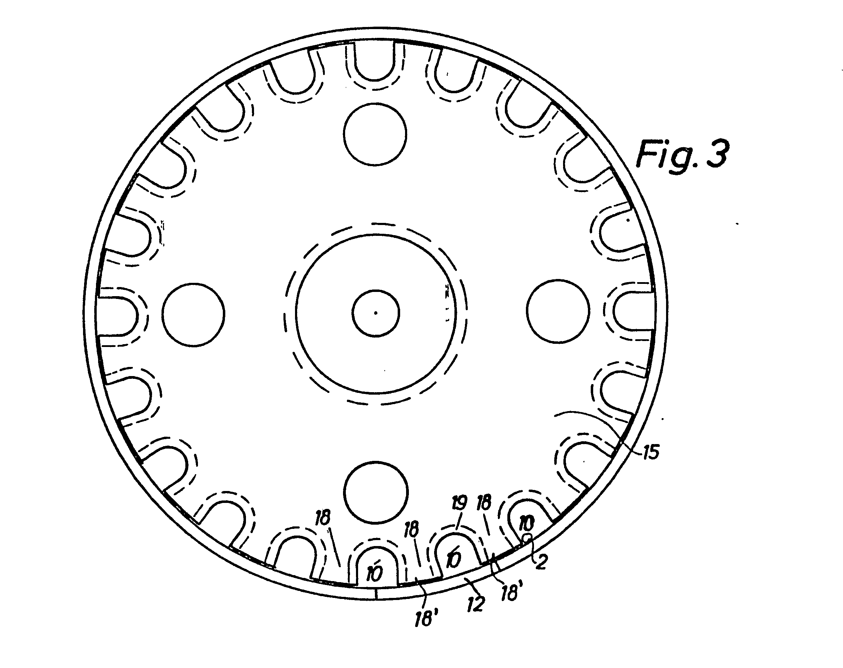

Die abgeriebene Beize sammelt sich nun in Zwischenräumen 16 und gelangt von dort in Sammelräume 15, die sich hier zwischen dem Außengehäuse 17 und dem Kammerrad 11 befinden. In diesem Ausführungsbeispiel ist eine Reihe von Durchtrittskanälen 18 vorgesehen, die einerseits in den benachbarten Sammelraum 15 münden und andererseits, nämlich am Stirnumfang des Kammerrades 11, mit ihren Öffnungen 18' in die Ausfallöffnung 12 münden. Hiermit wird die im Raum 15 gesammelte Beize durch die Kanäle 18 an den gleichen Erdstellen abgelegt, an denen Körner durch die Kornkammern 10 abgelegt wurden. Wie Fig. 3 zeigt, ist am Umfang des Kammerrades abwechselnd eine Kornkammer 10 und ein Durchtrittskanal 18 vorgesehen.

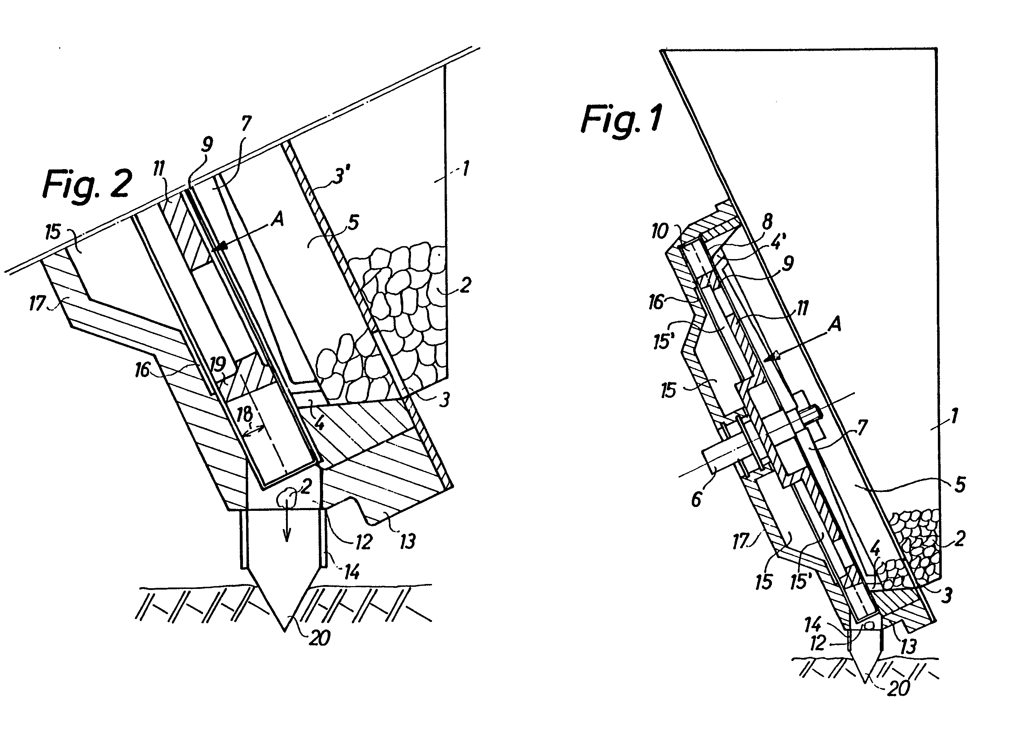

In dieser, bevorzugten Ausführungsform sind, wie bereits erwähnt, die Durchtrittskanäle 18 im Kammerrad vorgesehen und münden in einen ringzylindrischen Raum 15', der in den vorgenannten Sammelraum 15 übergeht, d. h. mit diesem zusammen einen gemeinsamen Sammelraum bildet. Die Breite der Durchtrittskanäle 18 ist in Fig 2. durch Doppelpfeil angegeben. Die die jeweilige Kornkammer 10 umgebende Kammerwand ist mit 19 beziffert. Hieraus ist ersichtlich, daß ein Teil der Länge des Durchtrittekanales zwischen den benachbarten Kornkammern 10 gelegen ist.

Solche Einzelkornsägeräte haben in der Regel eine Schräglage, d. h. die Ebene des Kammerrades bildet mit der Senkrechten einen Winkel (siehe Fig. 1 und 2). Hierbei empfiehlt es sich, den Sammelraum 15 zwischen der dann nach unten gelegenen Seitenwand 17 des Gehäuses und dem Kammerrad vorzusehen (siehe ebenfalls hierzu Fig. 1 und 2).

Anstelle des relativ breiten Sammelraumes 15, gegebenenfalls 15, 15' könnte auch nur der schmale, spaltförmige Zwischenraum (oder Zwischenräume) 16 für die Aufnahme der abgeriebenen Beize vorgesehen sein. Im letztgenannten Fall ist es besonders wichtig, daß die Durchtrittskanäle 18 vorhanden sind, um Verklebungen oder Zusetzen durch die Beize zu verhindern. Wie das Ausführungsbeispiel zeigt, können aber auch beide Arten von Aufnahmeräumen, d. h. gemäß Sammelraum 15 und gemäß spaltförmigem Zwischenraum 16 vorgesehen sein.

**Patentansprüche**

1. Einzelkornsägerät, bei dem jedes einzelne Saatgutkorn (2) von einer Beize umhüllt ist und vor seiner Ablage im Gerät von einem Schöpfrad (7) aus einem Schöpfraum (5) angehoben und im oberen Gerätebereich in eine Kornkammer (10) eines Kammerrades (11) gelegt wird, aus der dann das Korn (2) im unteren Gerätebereich durch eine in Bodennähe befindliche Ausfallöffnung (12) des Gerätes abgelegt wird, wobei sich die Kornkammern (10) am Außenumfang des Kammerrades (11) befinden, dadurch gekennzeichnet, daß im Einzelkornsägerät zumindest ein Raum (15, 16) für die Aufnahme der von den Körnern (2) abgefallenen oder abgeriebenen Beize (im folgenden kurz "Abrieb" genannt) vorgesehen ist, daß zumindest ein Durchtrittskanal (18) für den Abrieb vom jeweiligen Aufnahmeraum (15, 16) zu der tiefer als der Aufnahmeraum (15, 16) gelegenen Ausfallöffnung (12) führt, und daß der Durchtrittskanal, bzw. die Durchtrittskanäle (18) sich im Kammerrad (11) befinden, zumindest mit einem Teil ihrer Länge zwischen den Kornkammern (10) des Kammerrades (11) gelegen sind und am Außenumfang des Kammerrades (11) in Richtung zur Ausfallöffnung (12) münden.

2. Einzelkornsägerät nach Anspruch 1, dadurch gekennzeichnet, daß um den Außenumfang des Kammerrades (11) verteilt eine große Anzahl von Kornkammern (10) und Durchtrittskanälen (18) vorgesehen ist, wobei sich jeweils eine Kornkammer (10) und ein Durchtrittskanal (18) abwechseln.

3. Einzelkornsägerät nach Anspruch 1 oder 2, dadurch gekennzeichnet, daß als Aufnahmeraum ein Sammelraum (15) zwischen Kammerrad (11) und Gehäuse (17) des Gerätes vorgesehen ist, der sich bis in das Kammerradinnere (15') hinein erstreckt, wobei die Durchtrittskanäle (18) von diesem Kammerradinnern (15') her ausgehen.

4. Einzelkornsägerät nach einem der Ansprüche 1 bis 3, dadurch gekennzeichnet, daß als Aufnahmeraum neben dem Kammerrad (11) spaltförmige Zwischenräume (16) vorgesehen sind, die sich zwischen dem Kammerrad und einem der angrenzenden Bauteile befinden und in die Durchtrittskanäle (18) münden.

5. Einzelkornsägerät nach Anspruch 3 oder 4, dadurch gekennzeichnet, daß entweder nur ein oder mehrere Sammelräume, oder nur ein oder mehrere Zwischenräume oder aber eine Kombination von mindestens einem Sammelraum mit mindestens einem Zwischenraum vorgesehen ist.

6. Einzelkornsägerät nach einem der Ansprüche 1 bis 5, dadurch gekennzeichnet, daß bei schräg liegendem, d.h. im Winkel zur Senkrechten umlaufenden Kammerrad (11) sich der Sammelraum (15) zwischen der unten gelegenen Seitenwand (17) des Gehäuses und dem Kammerrad befindet.

**Claims**

1. Single grain sowing device, in which each individual seed stock grain (2) is enveloped by a protective substance, lifted by a scoop wheel (7) out of a scoop space (5) before its deposit in the device and laid in the upper device region into a grain chamber (10) of a chamber wheel (11), out of which the grain (2) is then deposited in the lower device region through a device outlet opening (12) disposed in proximity of the ground, wherein the grain chambers (10) are disposed at the external circumference of the chamber wheel (11), characterised thereby, that at least one space (15, 16) is provided in the single grain sowing device for the reception of the protective substance that has fallen or been rubbed off (named "dust" for short in the following) from the grains (2), that at least one passage channel (18) for the dust leads from the respective receiving space (15, 16) to the outlet opening (12), which lies lower than the receiving space (15, 16), and that the passage channel or channels (18) are disposed in the chamber wheel (11), are lying by at least a part of their length between the grain chambers (10) of the chamber wheel (11) and open out at the external circumference of the chamber wheel (11) in the direction of the outlet opening (12).

2. Single grain sowing device according to claim 1, characterised thereby, that a large number of grain chambers (10) and passage channels (18) is provided distributed around the external circumference of the chamber wheel (11), wherein a grain chamber (10) and a passage channel (18) alternate each time.

3. Single grain sowing device according to claim 1 or 2, characterised thereby, that a collecting space (15) is provided as receiving space between the chamber wheel (11) and housing (17) of the device and extends as far as into the chamber wheel interior (15'), wherein the passage channels (18) start out from this chamber wheel interior (15').

4. Single grain sowing device according to one of the claims 1 to 3, characterised thereby, that crevice-shaped intermediate spaces (15) are provided as receiving space beside the chamber wheel (11), are disposed between the chamber wheel and one of the adjoining components and open out into the passage channels (18).

5. Single grain sowing device according to claim 3 or 4, characterised thereby, that either only one or more collecting spaces or only one or more intermediate spaces or however a combination of at least one collecting space with at least one intermediate space is or are provided.

6. Single grain sowing device according to one of the claims 1 to 5, characterised thereby, that in the case of the chamber wheel (11) lying obliquely, i.e. rotating at an angle to the vertical, the collecting space (15) is disposed between the chamber wheel and that side wall (17) of the housing, which lies below.

**Revendications**

1. Semoir monograine dans lequel chaque graine individuelle (2) est entourée d'un agent phytosanitaire, est soulevée dans l'appareil, avant d'être déposée, par une roue préveleveuse (7) à partir d'une chambre de prélèvement (5), puis est placée, dans la région supérieure de l'appareil, dans un alvéole (10) à graine d'une roue (11) à alvéoles, à partir duquel la graine (2) est délivrée, dans la région inférieure de l'appareil, à travers un orifice de chute (12) de cet appareil situé à proximité du fond, les alvéoles (10) à graines étant disposés sur le pourtour externe de la roue (11) à alvéoles, caractérisé par le fait qu'au moins une chambre (15, 16) est prévue, dans ce semoir monograine, pour recevoir l'agent phytosanitaire séparé des graines (2) par chute ou par abrasion (qualifié brièvement ci-après de "résidu d'abrasion"); par le fait qu'au moins un canal (18) de passage de résidu d'abrasion part de la chambre réceptrice considérée (15, 16), et gagne l'orifice de chute (12) situé plus bas que cette chambre réceptrice (15, 16); et par le fait que le canal ou les chanaux de passage (18) se trouvent dans la roue (11) à alvéoles, s'étendent sur au moins une partie de leur longueur entre les alvéoles (10) à graines de cette roue (11) à alvéoles, et débouchent sur le pourtour externe de la roue (11) à alvéoles, en direction de l'orifice de chute (12).

2. Semoir monograine selon la revendication 1, caractérisé par le fait qu'il est prévu un grand nombre d'alvéoles (10) à graines et de canaux de passage (18) répartis autour de pourtour externe de la roue (11) à alvéoles, un alvéole (10) à graine et un canal de passage (18) alternant respectivement.

3. Semoir monograine selon la revendication 1 ou 2, caractérisé par le fait qu'il est prévu en tant que chambre réceptrice, entre la roue (11) à alvéoles et le boîtier (17) de l'appareil, une chambre collectrice (15) qui s'étend jusque dans l'espace interne (15') de la roue à alvéoles, les canaux de passage (18) partant de cet espace interne (15') de la roue à alvéoles.

4. Semoir monograine selon l'une des revendications 1 à 3, caractérisé par le fait que des chambres intercalaires (16) en forme de fente, prévues en tant que chambre réceptrice à côté de la roue (11) à alvéoles, se trouvent entre cette roue à alvéoles et l'une des parties constitutives attenantes, et débouchent dans les canaux de passage (18).

5. Semoir monograine selon la revendication 3 ou 4, caractérisé par le fait qu'il est prévu soit seulement une ou plusieurs chambres collectrices, soit seulement une ou plusieurs chambres intercalaires, soit encore une combinaison d'au moins une chambre collectrice et d'au moins une chambre intercalaire.

6. Semoir monograine selon l'une des revendications 1 à 5, caractérisé par le fait que, en présence d'une roue (11) à alvéoles occupant une position inclinée, c'est-à-dire tournant selon un angle par rapport à la verticale, la chambre collectrice (15) se trouve entre cette roue à alvéoles et la paroi latérale (17) du boîtier reléguée vers le bas.

Fig. 1

Fig. 2

Fig. 3